# EUROPÄISCHE PATENTSCHRIFT

(11) **EP 2 006 062 B1**
(45) Veröffentlichungstag und Bekanntmachung des Hinweises auf die Patenterteilung: **21.12.2016**
(21) Anmeldenummer: 08010869.9
(22) Anmeldetag: 16.06.2008
(51) Int. Cl.: B28C 5/08, B28C 5/18, B28C 7/12

(54) **Verfahren und Vorrichtung zur Feststoffumhüllung**
Method and device for encasing solids
Procédé et dispositif d'enveloppement de matière solide

(30) Priorität: 18.06.2007 DE 102007028445
(43) Veröffentlichungstag der Anmeldung: 24.12.2008
(73) Patentinhaber: Hochschule Karlsruhe, 76133 Karlsruhe (DE)
(72) Erfinder: Garrecht, Harald, Prof. Dr.-Ing., 76297 Stutensee (DE); Götz, Joachim, Dr.-Ing., 76479 Steinmauern (DE); Linsel, Stefan, Prof. Dr.-Ing., 76887 Bad Bergzabern (DE); Peciar, Marian, Prof. Dr.-Ing., 85101 Bratislava 5 (SK)
(74) Vertreter: Vossius & Partner Patentanwälte Rechtsanwälte mbB

(56) Entgegenhaltungen:
- AT-B- 368 038
- AT-B- 412 210
- GB-A- 790 636
- US-A- 4 351 670
- US-A- 5 037 286
- DATABASE WPI Week 200301 31. Januar 2003 (2003-01-31) Thomson Scientific, London, GB; AN 2003-007931 XP002625423, "artificial aggregate manufacture for concrete, comprises granulating pellet obtained using bentonite, slaked lime and iron oxide blended with coal ash", & JP 2002 316845 A (HOKURIKU DENRYOKU KK) 31. Oktober 2002 (2002-10-31)

## Beschreibung

Die vorliegende Erfindung betrifft das oberbegrifflich Beanspruchte und befasst sich demgemäß mit umhüllten Feststoffen. Umhüllte Feststoffe sind aus der Bauindustrie von einer Vielzahl von Anwendungen bekannt. So weisen Zuschläge für Beton oftmals einen Feststoff-Kern auf, der umhüllt ist, um eine gute Verarbeitbarkeit, chemische Beständigkeit und/oder eine feste Verbindung mit der Betonmatrix zu gewährleisten. Dieser Schichtaufbau aus einem Feststoff und einer Hülle erlaubt es, eine Vielzahl von Feststoffen zu verwenden, ohne in der Feststoffwahl stark durch die Frage beeinflusst zu werden, wie die Einbindung in die Betonmatrix erfolgen kann. Dies kann z.B. genutzt werden, um besonders leichte Betonarten durch Verwendung leichter, insbesondere poröser Feststoffe herzustellen, Rest-Stoffe wie Müll, Klärschlämme, Schlacken usw. nach umhüllungsbewirkter Inertisierung einer Verwendung im Bau zuzuführen usw.

Um eine Umhüllung von Feststoffen zu bewirken, sind verschiedene Verfahren bekannt. So ist aus der DE 30 40 344 A1 ein Baustoffgranulat auf Perlite-Grundlage bekannt, das aus geblähten Perliten gegebener Körnung und bestimmten Schüttgewicht in einer rotierenden Granuliertrommel mit Wasser in feinen Tröpfchen besprüht wird, worauf auf die vorbefeuchtete, rotierende Perlite-Masse Halbhydrat-Gips gleichmäßig aufgestreut wird. Danach kann neuerlich Wasser zwecks Anbindung des Stuckgipses erfolgen, um ein nur gering staubendes oder nach Zusatz von Glycerin oder dergl. in das zweite Sprühwasser vollständig staubfreies Perlite-Granulat zu erhalten.

Aus der US PS 4351 670 ist ein nicht-schrumpfender Leichtgewichtbeton bekannt, bei dem Körper aus gehärtetem zellularem Beton in Fragmente gebrochen werden, die Fragmente mit einer dünnen Zementschicht umhüllt und die überzogenen Fragmente in eine Zementmatrix eingebunden werden. Die Bruch-Fragmente sollen vor dem Umhüllen durch Rotation abgerundet und dann in einem mit Wasser oder Zementschlamm enthaltenden Behälter befeuchtet werden, worauf Überschusswasser über einem Sieb entfernt werden soll, bevor die Fragmente unter Drehung mit Zementstaub bestäubt werden.

Aus der EP 0 950 033 B1 ist ein Verfahren zur Verarbeitung eines Betons, der einen offenporigen Leichtzuschlagstoff enthält, auf welchen eine Umhüllung aus Zementen mit eingestelltem Wasserzementwert in einem Granulierteller beziehungsweise einer Granuliertrommel durch Agglomeration vorgesehen wird, bekannt, bei welchem vorgesehen ist, dass bei der Verarbeitung eine Druckbeaufschlagung mit Pumpdrücken erfolgt.

Aus der DD 208 142 ist ein Verfahren zur Herstellung von Bauelementen aus Leichtbeton mit Korn- und Haufwerksporen bekannt, das unter anderem die Verwendung von Braunkohlenasche als einzige Zuschlagsstoffkompenente bei geringem Zementverbrauch ermöglichen soll. Dazu sollen mehlfeine mineralische Stoffe ohne hydraulisches Erhärtungsvermögen auf Granuliertellern mit Wasser zu kugelförmigen Granalien geformt und mit Zementleim umhüllt werden. Die Granalien sollen nass sein, wobei ein hoher Feinstkornanteil bevorzugt ist, der mehr Wasser zum Granulieren benötigt.

Aus der EP 0 041 053 ist die Umhüllung von Material unter Verwendung von zwei Rotationstrommeln bekannt.

Aus der AT 368 038 ist eine Siebvorrichtung für körniges Gut als Zusatzgerät zum wahlweisen Ansetzen an drehbare Mischgeräte bekannt, wobei vorgeschlagen wird, dass mit Hilfe eines Gartenschlauches und der beschriebenen Vorrichtungen Nasssiebungen durchgeführt werden können.

Aus der JP 2002 316845 A ist ein künstliches Aggregat bekannt, das aus Pellets unter Wasserzugabe durch Backen nahe der Schmelztemperatur erhalten wird.

Aus der GB 790 636 ist ein Vermiculit bekannt, das unter Verwendung einer sich drehenden Trommel hergestellt wird, bei welchem Teilchen immer wieder in eine Beschichtungslösung hineinfallen. Erwähnt wird zur Herstellung einer wasserabweisenden Schicht Material wie Latex, Polyesterharz, Polyvinylchlorid oder -acetat, Silikon oder Stearin.

AT 412 210 B, entsprechend WO 2004/106257 A1, beschreibt bereits ein zweistufiges Umhüllungsverfahren, mit dessen Hilfe angeblich die Druckfestigkeit porösen Granulats gesteuert werden soll und die Wasseraufnahmefähigkeit beschränkt werden kann, ohne auf eine hohe Porosität des Granulats zu verzichten. Dazu soll Bruchkorn mit Wasser befeuchtet und anschließend wenigstens einmal mit einem gegebenenfalls mit Sand vermischten hydraulischen Bindemittel umhüllt und mit Wasser besprüht werden, bevor das hydraulische Bindemittel abbindet.

Aus der GB 2 327 669 A ist ein partikuläres, umhülltes Aggregatmaterial für Bauzwecke bekannt, wobei die Separierung umhüllter Teile detailliert diskutiert wird, ohne dass auf die eigentliche Technik der Umhüllung detailliert eingegangen wird; es wird lediglich ausgeführt, dass trockenes Pulver, zum Beispiel trockener Zement, überzogenen Aggregatteilchen auf einem Förderband zugegeben werden kann.

Aus dem Dokument DE 30 40 344 A1 ist ein Baustoffgranulat auf Perlite-Grundlage und ein Verfahren zu dessen Herstellung bekannt, wobei Perlite-Körner unter Mischen zunächst mit Wasser und danach mit Bindemittel bestreut werden sollen. Es wird dabei in Beispielen angegeben, dass das Besprühen in einer Granuliertrommel erfolgen soll, vergleiche Seite 9, 3. Absatz und Seite 10, 3. Absatz.

Aus der US-PS 5,037,286 ist bekannt, Asche aus Müllverbrennung zu Kugeln zu formen und zu umhüllen. Es wird dabei eine Rotationstrommel verwendet, vergleiche zum Beispiel Spalte 6, Zeilen 20-25.

Aus der EP 0 351 440 A1 ist ein Verfahren zum Einbetten von zu betonierendem asbesthaltigem Bauschutt bekannt, wobei Schuttschlamm durch Zugabe von Zement zu einem Frischbeton gemacht werden soll. Dies ist gänzlich anders als vorliegend. Problematisch ist bei der Herstellung von umhüllten Feststoffen, dass die gewünschten positiven Eigenschaften nicht ohne weiteres erhalten werden. So kann sich bei der Verwendung der umhüllten Feststoffe als Zuschlagstoffe im Betonbau eine nur partiell um einen Festkörper gebildete Hülle negativ auswirken, wenn durch die Umhüllungsfehler das für die Bildung einer Betonmatrix erforderliche Wasser in die gerade bei Leichtbeton-Zuschlagstoffen oftmals porösen Feststoffe eindringt. Dies ist besonders dann der Fall, wenn der mit den umhüllten Feststoffen gebildete Beton in große Höhen gepumpt werden soll, weil hier der Pumpdruck zu einem Eindringen des Wassers in durch die unzureichende Umhüllung evtl. offenen Kapillaren der Feststoffe führen kann. Auch der Aufbau von zu dicken Hüllen ist oftmals nachteilig, weil die Hüllschicht eine in der Regel größere Dichte besitzt als der Feststoff und damit eine zu dicke Hülle das Gesamtgewicht, d.h. die mittlere Massendichte des Betons erhöht, ohne dass sich die Festigkeit des Betons zugleich in einer die Massendichtezunahme rechtfertigenden Weise erhöht. Dass dies bei bestimmten Bauteilen, wie z.B. Spannbetonbrücken, unerwünscht ist, sei erwähnt. Überdies können Probleme auftreten, wenn die Menge an Wasser bei der Herstellung falsch gewählt ist. Ist sie zu niedrig, wird für die bei der Einbindung der Hülle in die Betonmatrix stattfindenden Hydratisierung zuviel Wasser verbraucht, so dass womöglich für die Hydratisierung der Betonmatrix nicht genug zur Verfügung steht; ist sie zu hoch, hydratisiert die Hülle womöglich vor der Verwendung ganz, was nicht immer gewünscht ist, z.B. weil eventuell ein schlechter Verbund Hülle-Matrix auftritt. Trotz dieser technischen Schwierigkeiten soll eine Umhüllung preiswert und sicher durchführbar sein. Derartige Probleme werden noch gravierender, wenn homogene Schichtdicken gewünscht werden und/oder auch polydispersen Ausgangsfeststoffe bzw. Granalien eingesetzt werden sollen und/oder ein zumindest quasikontinuierlicher Herstellungsbetrieb zu gewährleisten ist. Auch die Forderung nach einem geringen Einsatz des typisch vergleichsweise teuren Zementes, gutem Verbund, z.B. durch guten Verbund Feststoff-Hülle und Hülle-Matrix, nach der Erzielung hoher Festigkeiten, einem geringen Abrieb beim Verbau und die Forderung nach der Möglichkeit eines raschen Stoffumsatzes mit allenfalls kurzen Lagerzeiten sind im Stand der Technik nicht ohne weiteres trivial zu erfüllen.

Es wäre zu begrüßen, wenn zumindest eines der umrissenen Probleme einer wenigstens partiellen Linderung zugeführt werden könnte.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Es wird somit in einem ersten Aspekt der Erfindung ein Verfahren nach Anspruch 1 vorgeschlagen. Damit ist unter anderem vorgesehen, dass ein Feststoff rotierend befeuchtet und umhüllt wird, wobei der Feststoff in einer ersten Rotationsstufe befeuchtet, ausgetragen und in einer zweiten Rotationsstufe umhüllt wird.

Diese Vorgehensweise führt zunächst dazu, dass relativ wenig Wasser für eine gute Befeuchtung auf dem Feststoff-Gut verwendet werden muss, weil die Wassermenge in der ersten Rotationsstufe vollständig zur Befeuchtung zur Verfügung steht und auf dem Gut verteilt wird. Es ist nicht zu befürchten, dass Wasser im Übermaß zugesetzt werden muss, weil durch die Verwendung der Rotationsstufe zunächst eine sehr gleichmäßige Befeuchtung erreicht wird. Indem das befeuchtete Gut ausgetragen und in einer zweiten Stufe umhüllt wird, ergibt sich weiter die Möglichkeit einer Abtrennung von Überschusswasser, das an der Rotationsstufe verbleibt und/oder auf Abrieb und Bruchstücken, die erst bei oder durch die Rotation in der Stufe gebildet werden. Gerade in kontinuierlichen Verfahren bleibt bei Befeuchtung und Umhüllung in der gleichen Rotationsstufe zudem oftmals Hüllmaterial auf der Wand, reagiert dort mit Wasser durch und gelangt danach wieder auf neues Feststoff-Gut, was dessen Eigenschaften beeinträchtigt. Statt dieser negativen Effekte wird nunmehr eine sehr gleichmäßige Grundbefeuchtung eines bezüglich Partikelgröße erforderlichenfalls sehr homogenen Feststoffgemisches erhalten.

Es ist bevorzugt, wenn der Feststoff zumindest einen umfasst aus der Gruppe Blähton, Blähschiefer, Bauschutt, Straßenbelagsabbruch, insbesondere Autobahnabbruch, Bodenaushub, Abraum, industrielle Abfallstoffe, Hausmüll, hausmüllähnlicher Gewerbemüll, Schlacke, insbesondere Verbrennungsschlacken, Schlacken aus Rohstoffgewinnung, Filterrückstände, Recyclingmaterialien, glasartige Stoffe insbesondere aus der Müllverbrennung, Kunststoffe und Kunststoff-Recyclate, körnige Materialien aus organischen und/oder anorganischen Substanzen, z.B. aus der mechanisch-biologischen Restabfallbehandlung, Klärschlamm. Die vorliegende Erfindung ist somit für eine Vielzahl von Feststoffen einsetzbar, wobei durch die getrennte Befeuchtung und Umhüllung eine erhöhte Genauigkeit bei der Einstellung des Befeuchtungsmaßes signifikante Vorteile dadurch erhalten wird. Zudem ist ein Trommeln, d.h. eine Abrundung von Teilen durch längere Rotation in der Befeuchtungstrommel ermöglicht, was gerade bei harten, scharfkantigem Ausgangsgut wie glasartigen Feststoffen Vorteile bringt.

Es ist auch bevorzugt, wenn die Feststoffe spätestens vor der Umhüllung gesiebt werden, insbesondere vor und/oder während der Befeuchtung. Dies erlaubt es, eine gute Homogenität der Größenverteilung zu erhalten. Besonders bevorzugt ist die Siebung zwischen Befeuchtung und Umhüllung, weil so Bruchstücke entfernt werden können, die sich bei der Rotation in der ersten Rotationsstufe während der Befeuchtung gebildet haben. Dies erlaubt insbesondere die Verwendung des Verfahrens mit brüchigen Materialien ohne Nachteile für die Gleichmäßigkeit der Hüllstoffe.

Es ist auch bevorzugt, wenn eine Siebung zur Feinanteilentfernung und/oder Kornbandwahl erfolgt, insbesondere derart, dass die Bildung von Sekundärgranulaten mit zu hohem und/oder erhöhtem Zementanteil verringert ist. Alternativ könnte eine Siebung auch lediglich als Aufreinigung durchgeführt werden, um Fremdstoffe zu entfernen, z. B. besonders grober Stoffe aus Granulat oder dergl. Die Entfernbarkeit von Stoffen über andere als Methoden als die Siebung durch Lochsiebe sei erwähnt; beispielhaft seien hier die magnetische Entfernung von Metallen aus dem Ausgangsgut oder die Sichtung im Luft (z.B. Zyklonstrom) genannt. Soweit nicht anders erwähnt oder im Einzelfall aus sich heraus klar, wird Siebung vorliegend in diesem breiten Sinne als Aufreinigung bzw. Entfernung unerwünschter Partikel verstanden.

Es ist auch bevorzugt, wenn Wasser im Überschuss aufgesprüht wird. Dies wird möglich, weil durch das Austragen ein Überschuss verringert wird und Wasser auf der Austragestrecke verbleibt, sei es durch Feuchtigkeitsübertragung auf die Transportwege oder Verdunsten.

Es ist auch bevorzugt, wenn bei der Befeuchtung ein bestimmter Feuchtegehalt eingestellt, insbesondere eingeregelt wird. Dass eine Messung der Wassermenge und/oder des Feuchtegehalts möglich ist, sei erwähnt; die einschlägigen Mittel wie Durchflussmesser, Feuchtemesser etc. sind bekannt und brauchen hier nicht gesondert bezüglich Aufbau, Anbringung und Betrieb diskutiert werden.

Es ist auch bevorzugt, wenn eine Befeuchtung durch Besprühen mit Wasser erfolgt, weil Feintröpfigkeit beim Besprühen zu einer gleichmäßigen bzw. gleichmäßigeren Befeuchtung beiträgt, was klar im Hinblick auf die gewünscht gleichmäßige Umhüllung bevorzugt ist. Zudem verteilen sich die Tropfen auf der Oberfläche des Gutes im Regelfall, ohne tief in dieses einzudringen, wie dies bei Tauchen des Feststoffgutes der Fall wäre.

Es ist auch bevorzugt, wenn die Befeuchtung auf einem rotierenden Schrägteller erfolgt. Dies ermöglicht ein kontinuierliches Arbeiten und zudem eine gute Sichtkontrolle während der Befeuchtung, so dass die besonders bei wechselndem Feststoffgut erforderliche Prozessverfolgung- und -regelung ohne weiteres möglich ist und/oder auch eine automatisierte Prozessführung.

Es ist auch bevorzugt, wenn der Schrägteller einen Siebboden aufweist. Dies erlaubt es, während des Befeuchtens Überschusswasser zu entfernen, ohne dass sich das Material voll saugen kann, was die Massendichte in unerwünschter Weise erhöhen würde, und ermöglicht überdies die einfache Entfernung von Material, das, etwa auf Grund der bei der Rotation bewirkten Belastung, zerbricht, aus dem Feststoffgut schon während der Befeuchtung, was zu einer geringeren Abfallmasse und einem geringerem Wasserverbrauch führt.

Es ist auch bevorzugt, wenn das Austragen kontinuierlich erfolgt. Dies ist gerade bei Schrägtellern problemfrei möglich.

Es ist auch bevorzugt, wenn das angefeuchtete Material auf einem Förderband und/oder einer Rutsche in die zweite Rotationsstufe gefördert wird. Die Stufen müssen demgemäss nicht unmittelbar aneinander angrenzen, obwohl dies einleuchtenderweise möglich wäre. Es ergeben sich aber bei der Trennung Vorteile schon aufgrund der besseren Kontrollierbarkeit der Prozesse.

Es ist auch bevorzugt, wenn die zweite Rotationsstufe mit einem Rotationsteller gebildet ist. Dies bietet hinsichtlich der Prozesskontrolle für die Umhüllung die gleichen Vorteile wie für die Befeuchtung und hat maschinentechnisch den weiteren Vorteil, dass gleiche oder gleichartige Bauteile verwendet werden können, was die Wartung einer Maschine und die Ersatzteilhaltung begünstigt.

Es ist auch besonders bevorzugt, wenn die Feststoffe bei der Umhüllung weiter befeuchtet werden. Auf diese Weise kann ein zu hoher Wassergehalt besonders effizient vermieden werden und dennoch eine gute Anhaftung erreicht werden, weil bei der ersten Befeuchtung in der ersten Rotationsstufe bereits eine Grundfeuchte an der Oberfläche geschaffen wird, die bewirkt, dass gerade im kontinuierlichen Betrieb gute Eigenschaften erzielbar sind.

Es ist auch bevorzugt, wenn die Feststoffe durch Bestäuben mit Zementstaub und/oder Aufsprühen von Zementschlamm umhüllt werden. In beiden Fällen ergibt sich eine gute Anhaftung am vorbefeuchteten Gut und die Tatsache, dass das Gut eine definierte Grundfeuchte bei bereits gleichmäßiger Verteilung besitzt, bewirkt die gewünscht guten Eigenschaften. In der vorliegenden Erfindung wird, sofern nichts anderes für den Fachmann ersichtlich ist, unter Zementschlamm auch eine Zementschlämpe, ein Zementleim, ein Zementslurry und/oder eine Zementpaste verstanden. Es ist auch möglich, bei Verwendung von Zementschlamm anstelle von und/oder zusätzlich zu Zementstaub eine Pulveraufbringung, insbesondere Zementstaubaufbringung anzuschließen. Dies kann in einer zusätzlichen Stufe geschehen.

Es ist auch bevorzugt, wenn zumindest ein Zusatzstoff und/ oder ein Zusatzmittel bei der Feststoffumhüllung zugegeben wird. Dies ermöglicht, nicht nur homogene Eigenschaften zu erhalten, sondern die jeweils homogene, d. h. mit den Feststoffpartikeln näherungsweise gleichmäßig erhaltenen Eigenschaften, gezielt einzustellen.

Es ist auch bevorzugt, wenn zumindest ein Zusatzstoff und/oder Zusatzmittel aus der Gruppe, SF, d.h. Silicapulver, hydraulische Stoffe, inerte Stoffe insbesondere mit dichtester Packung, Additive CaOH-reiche Systeme für CO₂-Nachbehandlung und/oder Metallpulver. Dies erlaubt eine breite Erreichbarkeit bestimmter Eigenschaften durch Wahl geeigneter Additive.

Es ist auch bevorzugt, wenn nach der Umhüllung eine Nachbehandlung der umhüllten Feststoffe durchgeführt wird. Die Nachbehandlung kann u. a. eine Feuchtlagerung, ein Nachnässen, eine Wärmebehandlung, eine Heißdampfbehandlung und/oder eine CO₂-Begasung umfassen.

Es ist auch bevorzugt, wenn vor der Befeuchtung eine Vorbehandlung der zu umhüllenden Feststoffe erfolgt. Dies erlaubt es, dem jeweiligen Feststoffgut fremde Materialien auszusieben, d. h. auszusortieren oder eine Vorbereitung des gewünschten Materials auf die Umhüllung durchzuführen. Die Vorbehandlung wird demgemäß typisch zumindest einen der Schritte Ausgangsmaterialsiebung, Feuchtezustandseinstellung und/oder Inertisierung, insbesondere von auch im umhüllten Zustand eluierbaren Stoffen umfasst. Die letzten Vorbereitungsmaßnahmen verbreitern das Spektrum der Feststoffe, mit denen die Erfindung einsetzbar ist, erheblich.

Schutz wird auch beansprucht für eine Vorrichtung zur Feststoffumhüllung insbesondere nach einem der vorhergehenden Ansprüche, dadurch gekennzeichnet, dass eine erste und zweite Rotationsstufe für zu umhüllende Feststoffe vorgesehen sind, wobei der ersten Rotationsstufe Befeuchtungsmittel und der zweiten Rotationsstufe eine Umhüllungsmaterialzuführung zugeordnet sind. Für Wasser und Umhüllungs-Basismaterial ausschließlich oder evtl. sogar einschließlich Zuschlagsstoffen können in der Anlage Vorräte vorgesehen sein, insbesondere mit automatischen Dosiermitteln.

Bei der Vorrichtung kann eine oder können beide Rotationsstufen mit Schrägtellern, insbesondere mit Granuliertellern gebildet sein.

Es ist möglich, dass bei der Verwendung zweier Schrägteller diese allgemein aufeinander zuweisend geöffnet sind und in einer Mobilanlage, insbesondere einer per LKW und/oder LKW-Anhänger transportablen, insbesondere straßentransportablen Anlage angeordnet sind. Dies ermöglicht insbesondere die kostengünstige Verwendung des Verfahrens beim unmittelbaren Recycling von Straßenabbruchmaterial, wie er z. B. im Autobahnbau oftmals anfällt; es sind keine hohen Zusatzkosten für den Transport erforderlich, und die Investitionssumme kann gering sein. Die Ausbildung als leistungsstarke Anlage, z. B. durch Aufbringen der Mischgeräte und der Vorräte, von welchen Mischgeräte etwa förderband- und pumpleitungsbeaufschlagt werden, auf unterschiedlichen, im Gebrauch nahe beieinander anzuordnenden oder zu koppelnden Einheiten, erlaubt es, schnell größere Mengen Abbruchmaterials zu umhüllen, was einen kurzfristigen Einsatz mobiler Anlagen attraktiv macht.

Des Weiteren wird für die Verwendung eines Baustoffes, der wie vorstehend in allgemeiner oder spezieller Form beschrieben hergestellt ist, Schutz beansprucht, wobei der Baustoff für Schüttungen, insbesondere lärmdämmende Schüttungen, insbesondere Lärmschutzwälle, zur Erstellung von Frostschutzschichten im Wegebau und/oder unter Flächengründungen und/ oder für pumpfähige Leichtbetone und übliche Normalbetone bis hin zu Hochleistungsbetonen, insbesondere für Brückenbau, Behälterbau, Geschossdeckenverstärkung im Wohnungs- und/oder Wirtschaftsbau und/oder beim Bauen im Bestand und/oder als Zuschlagmaterial im Straßenbau, insbesondere als homogenes Zuschlagmaterial im Straßenbau, insbesondere für Straßenober- und/oder -unterbau verwendet wird.

Die vorliegende Erfindung wird im Folgenden nur beispielsweise anhand der Zeichnung beschrieben. In dieser ist dargestellt durch
- Fig. 1: eine Vorrichtung gemäß der vorliegenden Erfindung zur Veranschaulichung des Fließschemas;
- Fig. 2: eine mobile Vorrichtung gemäß der vorliegenden Erfindung.

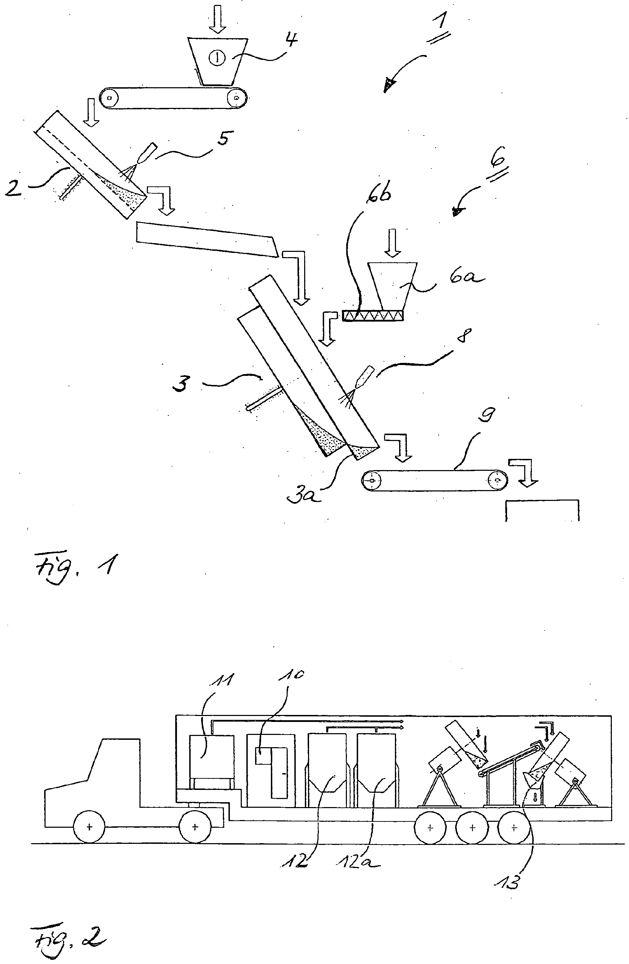

Nach Fig. 1 umfasst eine allgemein mit 1 bezeichnete Anlage zur Feststoffumhüllung 1 erste 2 und zweite 3 Rotationsstufen 2,3 für zu umhüllende Feststoffe 4, wobei der ersten Rotationsstufe Befeuchtungsmittel 5 und der zweiten Rotationsstufe eine Umhüllungsmaterialzuführung 6 zugeordnet sind.

Die Anlage zur Feststoffumhüllung 1 dient im vorliegenden Beispiel der Umhüllung wechselnder Feststoffe, die in einem zweistufigen Agglomerations-Verfahren zu pumpfähigem Leichtbeton-Zuschlagsstoffen verarbeitet werden sollen; d.h. dass eine Herstellung anderer Betonsorten möglich ist, etwa der vorstehend aufgeführten, sei erwähnt.

Für die Feststoffe 4 ist dazu ein Vorrats- und/oder Zudosierbehälter 4a vorgesehen, der über ein hier als Transportband dargestelltes Fördermittel 4b, mit welchem etwa durch Ausbildung als Lochband gegebenenfalls noch eine Siebung und/oder Sortierung erfolgen kann, zur Beaufschlagung unter Verwendung eines Schrägtellers 2 gebildeten ersten Rotationsstufe 2 mit Feststoffen wie Blähton oder Abbruchmaterial ausgebildet ist. Es sei hier darauf hingewiesen, dass der Vorrats- und/oder Zudosierbehälter 4a Wiege- oder Volumenmessmittel aufweisen kann und wird, die in per se bekannter Weise zur Steuerung des Materialflusses und -durchsatzes durch die Anlage verwendet werden. Die Messbarkeit einer Ausgangs-Feststoffgut-Grundfeuchte sei erwähnt.

Dem Schrägteller 2 der ersten Rotationsstufe ist als Befeuchtungsmittel 5 eine Wassersprüheinrichtung zugeordnet, mittels welcher in der Rotationsstufe rotierendes Material befeuchtet werden kann. Die zugesprühte Wassermenge ist durch einen Durchflussmesser und ein im Wasserzufluss angeordnetes Sperrventil (beide nicht dargestellt) bestimmbar. Die Sprüheinrichtung wird mit einem so hohen Druck beaufschlagt, dass sich eine feine Tröpfchenverteilung ergibt, was gewünscht, aber nicht zwingend ist. Die eingesprühte Wassermenge ist hier (nicht dargestellt) regelbar in Abhängigkeit vom Grundfeuchtegehalt der Feststoffe, der Feststoffmenge und dem bereits erzielten Feuchtegrad der in der Rotationsstufe 2 befindlichen Feststoffmenge; andere Einstellgrößen einschließlich Erfahrungswerten von Anlagenbetreibern sind einleuchtender Weise möglich.

Der Schrägteller 2 der ersten Rotationsstufe ist so angeordnet, dass simultan neues Feststoffgut zugeführt und bereits im Schrägteller einige Zeit befindliches und dort befeuchtetes Gut ausgetragen werden kann, was einen kontinuierlichen Betrieb erlaubt. Der Schrägteller 2 hat einen Rotationsantrieb (nicht dargestellt) und einen Siebboden, durch welchen Abrieb und zu kleine Partikel entfernt werden können.

Vom Schrägteller 2 der ersten Rotationsstufe fällt Material auf ein zur zweiten Rotationsstufe führendes Fördermittel, hier dargestellt als Transportrinne 7, die hier unmittelbar in die zweite Rotationsstufe 3 führt, welche wiederum mittels Schrägteller 3 realisiert ist.

Der Schrägteller 3 der zweiten Rotationsstufe ist zweistufig gebildet, d.h. er weist eine innere Stufe 3a derart auf, dass der äußere Kreis größer ist. Die Transportrinne 7 mündet so über dem Schrägteller 3 der zweiten Rotationsstufen, dass das befeuchtete Feststoffgut in den bodennahen Schrägtellerabschnitt mit kleinerem Radius fällt. Die wenngleich nicht zwingende Verwendung eines zweistufigen Schrägtellers ist besonders bevorzugt, weil durch sie die Menge an Material im Schrägteller erhöht wird und sichergestellt ist, dass das Material ein definiertes Schrägteller-Durchströmungsverhalten aufweist; es wird also besonders effizient verhindert, dass Material aus dem zweiten Schrägteller 3 nahezu unumhüllt weitertransportiert wird; bei der Befeuchtung wäre das zwar gleichfalls unerwünscht und es kann durch geeignete Maßnahmen wie Wahl der Tellerumdrehungsgeschwindigkeit, zugeführte Materialmenge und Wasserzufuhr verhindert werden, dass signifikante Mengen an unzureichend befeuchtetem Material ausströmen. Bei der Umhüllung ist die vollständige Erreichung aller Partikel jedoch besonders signifikant für die Endproduktqualität, weshalb die Verwendung eines teureren Zweistufentellers hier besonders lohnt.

In den Schrägteller 3 wird neben dem befeuchteten zu umhüllenden Feststoffgut, das über Transportrinne 7 antransportiert wird, noch dass umhüllende Material, wie erforderlich und gewünscht mit in benötigter Menge zugegebenen Zusatzstoffen eingebracht, zudosiert, wozu die Umhüllungsmaterialzuführung 6 neben dem Vorrat 6a für Umhüllungsmaterial einen Schneckendosierer aufweist 6b. Die Verwendbarkeit nicht mittels Schneckendosierer zuführ- und/oder dosierbarer Umhüllungsmaterialien, wie z. B. sprüh- oder tropfbarer Materialien und/oder Umhüllungsmaterialzubereitungen, sei erwähnt.

Dem Schrägteller 3 ist weiter eine zusätzliche Befeuchtungseinrichtung 8 zugeordnet, über die wie erforderlich weiteres Feuchtefluid zugeführt werden kann; die Verwendung von Wasser. mit Zusatzstoffen sei explizit als Möglichkeit erwähnt. Auf die Möglichkeit von Steuer- und/oder Regelmaßnahmen zur Zugabekontrolle sei an dieser Stelle explizit hingewiesen.

Dem Schrägtellern 3 ist ein weiteres Transportband 9 nachgeordnet, das das in Rotation fertig umhüllte Feststoffgut als umhülltes Granulat austrägt und einem Produktvorrat, Nachbehandlung oder sofortiger Weiterverwendung wie gewünscht zuführt.

Mit der Anordnung wird das Verfahren der vorliegenden Erfindung ausgeführt wie folgt:
Es wird ein Feststoff aus dem Vorratsbehälter 4 in den Schrägteller 2 dosiert, dort durch die Schrägteller-Rotation bewegt und zugleich durch Aufsprühen von Wasser befeuchtet, während Bruch- und Kleinpartikel über den Siebboden des ersten Schrägtellers 2 entfernt werden. Das rotierend befeuchtete Feststoffgut wird ausgetragen und über die Transportrinne in den zweiten Schrägteller 3 verbracht, wo es unter Rotation durch Zusatz der Umhüllmaterialien (die hier Additive umfassen) unter erforderlichenfalls weiterer Befeuchtung umhüllt wird, bis es hinreichend umhüllt ist, aus dem Schrägteller auf das Transportband 9 fällt und dann mit diesem von der zweiten Rotationsstufe weg verbracht wird.

Eine alternative und besonders bevorzugte Anlagenform ist in Fig. 2 dargestellt. Sie entspricht weitgehend in ihrer Funktionalität und ihrem prinzipiellen Aufbau der Anlage von Fig.1, ist aber so konstruiert, dass eine Mobilität erreicht wird. Es werden daher nachfolgend nur eine Beschreibung insoweit gegeben, dass die zur Mobilitätserreichung besonders vorteilhaften Maßnahmen beschrieben werden, ohne den aus dem vorstehenden ohne weiteres verständlichen Gesamtbetrieb zu erläutern.

Zur Verwirklichung einer mobilen Anlage sind auf - hier nur einem - transportablen LKW-Anhänger eine hier begeh- bzw. betretbare Steuereinheit 10, ein bevorzugt vorzusehender Wasserbehälter 11 und ein Zement- bzw. Additivbehälter 12, 12a vorgesehen, von denen Materialausgabeleitungen für Wasser bzw. umhüllendes Material respektive zu zwei aufeinander zuweisend aufgestellten Schrägtellern geführt sind, und zwar derart, dass zu beiden Schrägtellermischern bzw. Rotationsstufen Wasser geführt ist und zu einem Schrägteller, nämlich jenem der zweiten Rotationsstufe auch umhüllendes Material aus den Zement- bzw. Additivbehältern 12, 12a.

Anstelle einer passiven Förderrinne 7 zwischen erster und zweiter Rotationsstufe wird das befeuchtete Gut nun mit einem weiteren Transportband von der ersten zur zweiten Rotationsstufe verbracht, was geringe Bauhöhen ermöglicht. Das fertige Material kann quer zum Anhänger über eine Rinne oder ein weiteres Transportband 13 entfernt werden.

Es ist eine hohe Leistungsfähigkeit auch mit Anlagen einer noch sondergenehmigungs- und/oder sondermaßnahmenfrei straßentransportierbaren Größe möglich.

## Patentansprüche

1. Verfahren zur Feststoffumhüllung, worin
ein Feststoff
rotierend
in einer ersten Rotationsstufe befeuchtet,
ausgetragen
und
in einer zweiten Rotationsstufe umhüllt wird,
**dadurch gekennzeichnet, dass**
Befeuchtung in der ersten Rotationsstufe
und
Austragung
so erfolgen, dass
die Zugabe von Wasser im Übermass vermieden und/oder
Überschusswasser entfernt wird
und
zumindest die zweite Rotationsstufe mit einem Rotationsteller gebildet ist.

2. Verfahren nach dem vorhergehenden Anspruch, **dadurch gekennzeichnet, dass** die Befeuchtung in der ersten Rotationsstufe auf einem Rotationsteller mit Siebboden erfolgt und Überschusswasser während der Befeuchtung in der ersten Rotationsstufe entfernt wird.

3. Verfahren nach einem der vorhergehenden Ansprüche, **dadurch gekennzeichnet, dass** beim Austragen ein Wasserüberschuss verringert wird.

4. Verfahren nach einem der vorhergehenden Ansprüche, **dadurch gekennzeichnet, dass** Wasserüberschuss verringert wird, indem Überschusswasser auf Abrieb und Bruchstücken verbleibt.

5. Verfahren zur Feststoffumhüllung nach einem der vorhergehenden Ansprüche, **dadurch gekennzeichnet, dass** die Feststoffe spätestens vor der Umhüllung gesiebt werden, insbesondere vor und/oder während der Befeuchtung.

6. Verfahren zur Feststoffumhüllung nach einem der vorhergehenden Ansprüche, **dadurch gekennzeichnet, dass** eine Befeuchtung durch Besprühen mit Wasser erfolgt.

7. Verfahren zur Feststoffumhüllung nach einem der vorhergehenden Ansprüche, **dadurch gekennzeichnet, dass** bei der Befeuchtung ein bestimmter Feuchtegehalt eingestellt, insbesondere eingeregelt wird.

8. Verfahren zur Feststoffumhüllung nach dem vorhergehenden Anspruch, **dadurch gekennzeichnet, dass** der Schrägteller einen Siebboden aufweist.

9. Verfahren zur Feststoffumhüllung nach einem der vorhergehenden Ansprüche, **dadurch gekennzeichnet, dass** das Austragen und/oder Eintragen kontinuierlich erfolgt.

10. Verfahren zur Feststoffumhüllung nach einem der vorhergehenden Ansprüche, **dadurch gekennzeichnet, dass** das angefeuchtete Material auf einem Förderband und/oder einer Rutsche in die zweite Rotationsstufe gefördert wird.

11. Verfahren zur Feststoffumhüllung nach einem der vorhergehenden Ansprüche, **dadurch gekennzeichnet, dass** die Feststoffe bei der Umhüllung weiter befeuchtet werden.

12. Verfahren zur Feststoffumhüllung nach einem der vorhergehenden Ansprüche, **dadurch gekennzeichnet, dass** eine Siebung zur Feinanteilentfernung und/oder Kornbandwahl erfolgt, insbesondere derart, dass die Bildung von Sekundärgranulaten mit zu hohem und/oder erhöhtem Zementanteil verringert ist.

13. Verfahren zur Feststoffumhüllung nach dem vorhergehenden Anspruch, **dadurch gekennzeichnet, dass** der Feststoff zumindest einen umfasst aus der Gruppe Blähton, Blähschiefer, Bauschutt, Straßenbelagsabbruch, insbesondere Autobahnabbruch, Bodenaushub, Abraum, industrielle Abfallstoffe, Hausmüll, mechanisch-biologische Restabfallbehandlung, hausmüllähnlicher Gewerbemüll, Schlacke, insbesondere Verbrennungsschlacken, Schlacken aus Rohstoffgewinnung, Filterrückstände, Recyclingmaterialien, glasartige Stoffe insbesondere aus der Müllverbrennung, Kunststoffe und Kunststoff-Recyclate, körnige Materialien aus organischen und/oder anorganischen Substanzen, Klärschlamm.

14. Verfahren zur Feststoffumhüllung nach einem der vorhergehenden Ansprüche, **dadurch gekennzeichnet, dass** die Feststoffe durch Bestäuben mit Zementstaub und/oder Aufsprühen von Zementschlamm umhüllt werden.

15. Verfahren zur Feststoffumhüllung nach einem der vorhergehenden Ansprüche, **dadurch gekennzeichnet, dass** zumindest ein Zusatzstoff und/oder Zusatzmittel bei der Feststoffumhüllung zugegeben wird.

16. Verfahren zur Feststoffumhüllung nach dem vorhergehenden Anspruch, **dadurch gekennzeichnet, dass** zumindest ein Zusatzstoff und/oder Zusatzmittel aus der Gruppe SF, hydraulische Stoffe, inerte Stoffe, insbesondere mit dichtester Packung, Additive CaOH-reiche Systeme für CO₂-Nachbehandlung und/oder Metallpulver zugegeben wird.

17. Verfahren zur Feststoffumhüllung nach einem der vorhergehenden Ansprüche, **dadurch gekennzeichnet, dass** nach der Umhüllung eine Nachbehandlung der umhüllten Feststoffe durchgeführt wird.

18. Verfahren zur Feststoffumhüllung nach dem vorhergehenden Anspruch, **dadurch gekennzeichnet, dass** die Nachbehandlung eine Feuchtlagerung, ein Nachnässen, eine Wärmebehandlung, eine Heißdampfbehandlung und/oder eine CO₂-Begasung umfasst.

19. Verfahren zur Feststoffumhüllung nach einem der vorhergehenden Ansprüche **dadurch gekennzeichnet, dass** vor der Befeuchtung eine Vorbehandlung der zu umhüllenden Feststoffe erfolgt.

20. Verfahren zur Feststoffumhüllung nach dem vorhergehenden Anspruch, **dadurch gekennzeichnet, dass** die Vorbehandlung zumindest einen der Schritte Ausgangsmaterialsiebung, Feuchtezustandseinstellung und/oder Inertisierung insbesondere von auch im umhüllten Zustand eluierbaren Stoffen umfasst.

21. Vorrichtung zur Feststoffumhüllung insbesondere nach einem der vorhergehenden Ansprüche, **dadurch gekennzeichnet, dass** erste und zweite Rotationsstufen für zu umhüllende Feststoffe vorgesehen sind, wobei der ersten Rotationsstufe Befeuchtungsmittel und der zweiten Rotationsstufe eine Umhüllungsmaterialzuführung zugeordnet ist, zumindest die zweite Rotationsstufe mit einem Schrägteller gebildet ist und Mittel zur Einstellung eines bestimmten Feuchtegehalts vorgesehen sind.

22. Vorrichtung nach dem vorhergehenden Anspruch, **dadurch gekennzeichnet, dass** die Rotationsstufen mit Schrägtellern, insbesondere Granuliertellern und/oder Schrägteller mit Siebboden gebildet sind.

23. Vorrichtung nach dem vorhergehenden Anspruch, **dadurch gekennzeichnet, dass** die Schrägteller allgemein aufeinander zuweisend geöffnet sind und in einer Mobilanlage, insbesondere einer per LKW und/oder LKW-Anhänger transportablen, insbesondere straßentransportablen Anlage angeordnet sind.

24. Verwendung eines Baustoffes hergestellt nach einem der vorhergehenden Verfahrens-Ansprüche, **dadurch gekennzeichnet, dass** der Baustoff für Schüttungen, insbesondere lärmdämmende Schüttungen, insbesondere Lärmschutzwälle, zur Erstellung von Frostschutzschichten im Wegebau und/oder unter Flächengründungen und/oder für pumpfähige Leichtbetone insbesondere für Brückenbau, Behälterbau, Geschossdeckenverstärkung im Wohnungs- und/oder Wirtschaftsbau und/oder beim Bauen im Bestand und/oder als Zuschlagmaterial im Straßenbau, insbesondere als homogenes Zuschlagmaterial im Straßenbau, insbesondere für Straßenober- und/oder -unterbau verwendet wird.

## Claims

1. Method for encasing solids, wherein a solid is wetted in a rotating manner in a first rotational stage, discharged and encased in a second rotational stage, **characterized in that** the wetting in the first rotational stage and the discharging take place in such a way that the adding of excessive water is avoided and/or excess water is removed and at least the second rotational stage is formed by a rotational plate.

2. Method according to the preceding claim, **characterized in that** the wetting in the first rotational stage takes place on a rotational plate with a strainer base and excess water during the wetting in the first rotational stage is removed.

3. Method according to one of the preceding claims, **characterized in that** excessive water during the discharging is reduced.

4. Method according to one of the preceding claims, **characterized in that** excessive water is reduced by excess water remaining on abraded matter and fragments.

5. Method for encasing solids according to one of the preceding claims, **characterized in that** the solids are strained at the latest before the encasing, in particular before and/or during the wetting.

6. Method for encasing solids according to one of the preceding claims, **characterized in that** a wetting takes place by spraying with water.

7. Method for encasing solids according to one of the preceding claims, **characterized in that** during the wetting a certain moisture content is set, in particular adjusted by a control system.

8. Method for encasing solids according to the preceding claim, **characterized in that** the inclined plate has a strainer base.

9. Method for encasing solids according to one of the preceding claims, **characterized in that** the discharging and/or charging takes place continuously.

10. Method for encasing solids according to one of the preceding claims, **characterized in that** the wetted material is conveyed into the second rotational stage on a conveyor belt and/or a slide.

11. Method for encasing solids according to one of the preceding claims, **characterized in that** the solids are wetted further during the encasing.

12. Method for encasing solids according to one of the preceding claims, **characterized in that** a straining takes place to remove fines and/or to choose a grain size range, in particular in such a way that the formation of secondary granules with an excessive and/or increased cement content is reduced.

13. Method for encasing solids according to the preceding claim, **characterized in that** the solid comprises at least one from the group expanded clay, expanded shale, building rubble, material from breaking up road surfacings, in particular motorway surfacings, excavated earth, overburden, industrial waste, household refuse, residual waste from mechanical-biological treatment, commercial waste similar to household refuse, slag, in particular incineration slag, slag from raw material extraction, filter residues, recycled materials, glass-like substances, in particular from refuse incineration, plastics and recycled plastics, granular materials from organic and/or inorganic substances, sewage sludge.

14. Method for encasing solids according to one of the preceding claims, **characterized in that** the solids are encased by dusting with cement dust and/or spraying with cement slurry.

15. Method for encasing solids according to one of the preceding claims, **characterized in that** at least one additive and/or added agent is added during the encasing of the solid.

16. Method for encasing solids according to the preceding claim, **characterized in that** at least one additive and/or added agent from the group SF, hydraulic substances, inert substances, in particular with densest packing, additive CaOH-rich systems for CO₂ after-treatment and/or metal powders is added.

17. Method for encasing solids according to one of the preceding claims, **characterized in that** after the encasing an after-treatment of the encased solids is carried out.

18. Method for encasing solids according to the preceding claim, **characterized in that** the after-treatment comprises storing in a humid atmosphere, after-wetting, heat treatment, hot-steam treatment and/or exposure to CO₂ gas.

19. Method for encasing solids according to one of the preceding claims, **characterized in that** before the wetting a pretreatment of the solids to be encased takes place.

20. Method for encasing solids according to the preceding claim, **characterized in that** the pretreatment comprises at least one of the steps of straining the starting material, setting the moisture state and/or inertizing, in particular substances that are elutable even in the encased state.

21. Device for encasing solids, in particular according to one of the preceding claims, **characterized in that** first and second rotational stages for solids to be encased are provided, wherein the first rotational stage is assigned wetting means and the second rotational stage is assigned an encasing material feed, at least the second rotational stage is formed by an inclined plate and means for setting a certain moisture content are provided.

22. Device according to the preceding claim, **characterized in that** the rotational stages are formed by inclined plates, in particular granulating plates and/or inclined plates with strainer bases.

23. Device according to the preceding claim, **characterized in that** the inclined plates are generally open facing one another and are arranged in a mobile installation, in particular an installation that is transportable on a truck and/or truck trailer, in particular a road-transportable installation.

24. Use of a building material produced by one of the preceding method claims, **characterized in that** the building material is used for fillings, in particular noise-insulating fillings, in particular noise barriers, for providing frost protection layers in path construction and/or under spread foundations and/or for pumpable lightweight concrete, in particular for bridge building, tank construction, floor reinforcement in the construction of residential and/or commercial buildings and/or for building in existing structures and/or as an aggregate in roadbuilding, in particular as a homogeneous aggregate in roadbuilding, in particular for road superstructures and/or substructures.

## Revendications

1. Procédé pour l'enrobage de matières solides, dans lequel une matière solide est humidifiée en subissant une rotation dans un premier étage de rotation, est déchargée, et est enrobée dans un deuxième étage de rotation,
**caractérisé en ce que** l'humidification dans le premier étage de rotation et la décharge ont lieu de telle sorte que l'addition d'eau en excès soit évitée, et/ou que l'eau excédentaire soit éliminée, et qu'au moins le deuxième étage de rotation est formé avec un disque de rotation.

2. Procédé selon la revendication précédente, **caractérisé en ce que** l'humidification dans le premier étage de rotation a lieu sur un disque de rotation muni d'un fond perforé, et l'eau excédentaire est éliminée pendant l'humidification dans le premier étage de rotation.

3. Procédé selon l'une des revendications précédentes, **caractérisé en ce qu'**on diminue l'excès d'eau lors de la décharge.

4. Procédé selon l'une des revendications précédentes, **caractérisé en ce qu'**on diminue l'excédent d'eau par le fait que l'eau en excès reste sur les poussières et les fragments.

5. Procédé pour l'enrobage de matières solides selon l'une des revendications précédentes, **caractérisé en ce que** les matières solides sont tamisées au plus tard avant l'enrobage, en particulier avant et/ou pendant l'humidification.

6. Procédé pour l'enrobage de matières solides selon l'une des revendications précédentes, **caractérisé en ce qu'**une humidification a lieu par pulvérisation avec de l'eau.

7. Procédé pour l'enrobage de matières solides selon l'une des revendications précédentes, **caractérisé en ce que**, lors de l'humidification, on ajuste, en particulier on régule une certaine teneur en humidité.

8. Procédé pour l'enrobage de matières solides selon la revendication précédente, **caractérisé en ce que** le disque incliné comprend un fond perforé.

9. Procédé pour l'enrobage de matières solides selon l'une des revendications précédentes, **caractérisé en ce que** la décharge et/ou l'alimentation ont lieu en continu.

10. Procédé pour l'enrobage de matières solides selon l'une des revendications précédentes, **caractérisé en ce que** le matériau humidifié est, sur une bande transporteuse et/ou une goulotte, transporté dans le deuxième étage de rotation.

11. Procédé pour l'enrobage de matières solides selon l'une des revendications précédentes, **caractérisé en ce que** les matières solides subissent une humidification supplémentaire lors de l'enrobage.

12. Procédé pour l'enrobage de matières solides selon l'une des revendications précédentes, **caractérisé en ce qu'**on procède à un tamisage pour éliminer les fines et/ou pour le choix de la plage granulométrique, en particulier de telle sorte que la formation de granulats secondaires, ayant une proportion trop élevée et/ou élevée de ciment, soit diminuée.

13. Procédé pour l'enrobage de matières solides selon la revendication précédente, **caractérisé en ce que** la matière solide comprend au moins une matière solide du groupe consistant en l'argile expansée, l'ardoise expansée, les gravats, les résidus de démolition de revêtements routiers, en particulier les résidus de démolition d'autoroutes, les déblais de terrassement, les morts-terrains, les déchets industriels, les ordures ménagères, le traitement mécanique et biologique des déchets résiduels, les ordures industrielles analogues à des ordures ménagères, les scories, en particulier les scories de combustion, les scories de l'extraction des matières premières, les résidus de filtration, les matériaux de recyclage, les substances fibreuses provenant en particulier de l'incinération des ordures, les matières plastiques et les produits de recyclage des matières plastiques, les matériaux granulaires provenant de substances organiques et/ou inorganiques, les boues résiduaires.

14. Procédé pour l'enrobage de matières solides selon l'une des revendications précédentes, **caractérisé en ce que** les matières solides sont enrobées par saupoudrage de ciment pulvérisé et/ou par pulvérisation de laitance de ciment.

15. Procédé pour l'enrobage de matières solides selon l'une des revendications précédentes, **caractérisé en ce que**, lors de l'enrobage des matières solides, on ajoute au moins un produit d'addition et/ou un adjuvant.

16. Procédé pour l'enrobage de matières solides selon la revendication précédente, **caractérisé en ce qu'**on ajoute au moins un produit d'addition et/ou un adjuvant du groupe consistant en le SF, les substances hydrauliques, les substances inertes, en particulier avec un tassement très dense, les systèmes additifs riches en CaOH pour post-traitement au CO₂ et/ou les poudres métalliques.

17. Procédé pour l'enrobage de matières solides selon l'une des revendications précédentes, **caractérisé en ce qu'**on procède après l'enrobage à un post-traitement des matières solides enrobées.

18. Procédé pour l'enrobage de matières solides selon la revendication précédente, **caractérisé en ce que** le post-traitement comprend un stockage humide, un post-mouillage, un traitement thermique, un traitement à la vapeur chaude et/ou une insufflation de CO₂ gazeux.

19. Procédé pour l'enrobage de matières solides selon l'une des revendications précédentes, **caractérisé en ce qu'**on procède avant l'humidification à un traitement préalable des matières solides à enrober.

20. Procédé pour l'enrobage de matières solides selon la revendication précédente, **caractérisé en ce que** le traitement préalable comprend au moins une des étapes tamisage des matières de départ, ajustement de l'état d'humidité et/ou inertisation, en particulier de substances pouvant aussi être éluées à l'état enrobé.

21. Dispositif pour l'enrobage de matières solides, en particulier selon l'une des revendications précédentes, **caractérisé en ce qu'**on prévoit un premier et un deuxième étages de rotation pour les matières solides à enrober, des moyens d'humidification étant affectés au premier étage de rotation et un système d'amenée de matériau d'enrobage étant affecté au deuxième étage de rotation, le deuxième étage de rotation étant formé d'un disque incliné, et des moyens étant prévus pour ajuster une certaine teneur en humidité.

22. Dispositif selon la revendication précédente, **caractérisé en ce que** les étages de rotation sont formés avec des disques inclinés, en particulier des disques de granulation et/ou des disques inclinés avec fond perforé.

23. Dispositif selon la revendication précédente, **caractérisé en ce que** les disques inclinés sont d'une manière générale ouverts en étant dirigés l'un contre l'autre, et sont disposés dans une installation mobile, en particulier dans une installation pouvant être transportée, en particulier pouvant être transportée par route, par camion et/ou par remorque de camion.

24. Utilisation d'un matériau de construction fabriqué selon l'une des revendications de procédé précédentes, **caractérisée en ce que** le matériau de construction est utilisé pour des remblais, en particulier des remblais amortisseurs de bruit, en particulier des murs antibruit, pour réaliser des couches antigel en construction de chemins et/ou sous des fondations superficielles, et/ou pour des bétons légers pouvant être pompés, en particulier pour la construction de ponts, la construction de récipients, le renforcement des planchers, dans la construction de bâtiments à usage d'habitation et/ou industriels, et/ou lors de la construction dans l'existant et/ou en tant que granulats en construction routière, en particulier en tant que granulats homogènes en construction routière, en particulier pour les superstructures et/ou les fondations de chaussées.
